# EUROPEAN PATENT SPECIFICATION

(11) **EP 2 669 046 B1**
(45) Date of publication and mention of the grant of the patent: **19.08.2020**
(21) Application number: 12739268.6
(22) Date of filing: 19.01.2012
(51) Int. Cl.: B24B 37/00, C09K 3/14, B24B 37/04, C09G 1/02

(54) **ABRASIVE AND POLISHING COMPOSITION**
SCHLEIFMITTEL UND POLIERZUSAMMENSETZUNG
ABRASIF ET COMPOSITION DE POLISSAGE

(30) Priority: 27.01.2011 JP 2011015799; 26.05.2011 JP 2011117743
(43) Date of publication of application: 04.12.2013
(73) Proprietor: Fujimi Incorporated, Kiyosu-shi, Aichi 452-8502 (JP)
(72) Inventor: MORINAGA, Hitoshi, Kiyosu-shi Aichi 452-8502 (JP); YAMADA, Eiichi, Kiyosu-shi Aichi 452-8502 (JP); TAMAI, Kazusei, Kiyosu-shi Aichi 452-8502 (JP); ISHIBASHI, Tomoaki, Kiyosu-shi Aichi 452-8502 (JP); OTSU, Taira, Kiyosu-shi Aichi 452-8502 (JP); ISHIHARA, Naoyuki, Kiyosu-shi Aichi 452-8502 (JP); TAKAHASHI, Youhei, Kiyosu-shi Aichi 452-8502 (JP)
(74) Representative: Grünecker Patent- und Rechtsanwälte PartG mbB
(86) International application number: PCT/JP2012/051119
(87) International publication number: WO 2012/102180

(56) References cited:
- WO-A1-2006/123562
- JP-A- H04 357 115
- JP-A- 2003 188 122
- JP-A- 2004 204 116
- JP-A- 2004 269 331
- JP-A- 2005 197 664
- JP-A- 2005 197 664
- US-A- 5 011 673
- US-A- 5 935 278
- US-A1- 2008 307 712

## Description

### TECHNICAL FIELD

The present invention relates to an abrasive and a polishing composition for use in polishing a hard and brittle material, such as sapphire, silicon nitride, silicon carbide, silicon oxide, glass, gallium nitride, gallium arsenide, indium arsenide, and indium phosphide. The invention also relates to a method of polishing a hard and brittle material and a method of manufacturing a hard and brittle material substrate.

### BACKGROUND ART

For the polishing compositions used in polishing substrates, such as glass substrates for hard disks, glass substrates for liquid-crystal display panels, and synthetic quartz substrates for photomasks, it is strongly required that the surface roughness of the polished substrate be small and the polished substrate have few surface defects, such as scratches, to improve the quality of the polished substrate,. Moreover, to shorten the time taken by the polishing operation, it is also required that the substrate polishing rate (rate of removal) be high.

A cerium oxide-based abrasive has sometimes been used up until now in glass substrate polishing applications (Patent Document 1). However, Japan currently depends on imports from abroad of cerium and other rare-earth elements. With rare-earth elements, there is a concern over the possibility of supply shortages due to international situations, and of associated increases in price. Accordingly, the development of abrasives made of alternative materials that do not require the use of rare-earth elements has been awaited.

A polishing composition used in applications other than polishing of glass substrates is described in Patent Document 2. The polishing composition of Patent Document 2 is composed of fine particles of zirconium oxide and a polishing promoter. However, when the polishing composition of Patent Document 2 is used in polishing a hard and brittle material, such as a glass substrate, it is impossible to fully satisfy all of the above requirements.

Zirconium oxide particles suitable for use in polishing are known from documents including JPH04357115, JP2005/197664, US 5,011,673 and JP 2004/269331.

### PRIOR ART DOCUMENTS

Patent Document 1: Japanese Laid-Open Patent Publication No. 2010-16064
Patent Document 2: Japanese Laid-Open Patent Publication No. 10-121034

### SUMMARY OF THE INVENTION

### Problems that the Invention is to Solve

Accordingly, it is an objective of the present invention to provide an abrasive and a polishing composition that can be more advantageously used in polishing a hard and brittle material, such as sapphire, silicon nitride, silicon carbide, silicon oxide, glass, gallium nitride, gallium arsenide, indium arsenide, and indium phosphide. Further objective of the present invention is to provide a method of polishing a hard and brittle material and a method of manufacturing a hard and brittle material substrate by using such an abrasive.

### Means for Solving the Problems

The inventors have conductive extensive investigations, as a result of which they have discovered that the above objectives are achieved by using an abrasive containing specific zirconium oxide particles. Even a person skilled in the art cannot easily conceive the idea of setting the specific surface area, purity, and particle size of zirconium oxide particles within given respective ranges in such a way as to satisfy the requirement of obtaining a polished surface having a small surface roughness and few surface defects while at the same time increasing the polishing rate. In particular, a person skilled in the art cannot easily arrive at the realization that polishing properties equivalent to or better than when using cerium oxide particles are obtained by using specific zirconium oxide particles in applications that involve polishing a hard and brittle material, such as glass substrates.

To achieve the foregoing objectives and in accordance with one aspect of the present invention, an abrasive is provided according to claim 1 that contains zirconium oxide particles having a specific surface area of from 1 to 9 m²/g.

The zirconium oxide particles preferably have a purity of no less than 99% by mass. The zirconium oxide particles have an average primary particle size of 0.3 µm or less. The zirconium oxide particles have an average secondary particle size of from 0.1 to 5 µm. Of the zirconium oxide particles, it is preferable for the number of particles having a secondary particle size of no less than 5 µm to be 10,000,000 or less per mL of an aqueous dispersion containing 1% by mass of the zirconium oxide particles.

In accordance with another aspect of the present invention, a polishing composition is provided that contains the above-described abrasive and water. The content of the abrasive in the polishing composition is no less than 0.1% by mass. Preferably, the polishing composition further contains a cerium salt and/or a zirconium salt.

In accordance with yet another aspect of the present invention, a method of polishing a hard and brittle material with the above-described polishing composition is provided. A method of manufacturing a hard and brittle material substrate is also provided. The manufacturing method includes polishing a substrate using the foregoing polishing method.

### Effects of the Invention

The present invention provides an abrasive and a polishing composition that can be more advantageously used in polishing a hard and brittle material, such as sapphire, silicon nitride, silicon carbide, silicon oxide, glass, gallium nitride, gallium arsenide, indium arsenide, and indium phosphide. Also provided are a method of polishing a hard and brittle material and a method of manufacturing a hard and brittle material substrate by using such an abrasive.

### MODE FOR CARRYING OUT THE INVENTION

An embodiment of the present invention will be described below.

A polishing composition according to the present embodiment includes an abrasive and water. The abrasive contains zirconium oxide particles. The polishing composition is suitable for use in polishing a hard and brittle material, such as sapphire, silicon nitride, silicon carbide, silicon oxide, glass, gallium nitride, gallium arsenide, indium arsenide, and indium phosphide.

The zirconium oxide particles in the abrasive may be composed of crystalline zirconia that is, for example, cubic, monoclinic, or may be amorphous zirconia. Monoclinic zirconia is preferred as the abrasive. The zirconium oxide particles may contain calcium, magnesium, hafnium, yttrium, silicon, or the like. However, it is preferable for the purity of the zirconium oxide particles to be as high as possible. Specifically, the purity is preferably no less than 99% by mass, more preferably no less than 99.5% by mass, and even more preferably no less than 99.8% by mass. As the purity of the zirconium oxide particles increases within the range of no less than 99% by mass, the polishing rate of a hard and brittle material with the polishing composition is improved. In this respect, when the purity of the zirconium oxide particle is no less than 99% by mass, more specifically no less than 99.5% by mass, and even more specifically no less than 99.8% by mass, it is easy to increase the polishing rate of a hard and brittle material with the polishing composition to a level particularly suitable for practical use.

The purity of the zirconium oxide particles can be calculated from the combined amount of zirconium oxide and hafnium oxide measured with a fluorescence X-ray spectrometer, such as XRF-1800 manufactured by Shimadzu Corporation.

Impurities in the zirconium oxide particles can be measured by powder X-ray diffractometry. For example, it is preferable for the intensity of the diffraction peak near 2θ = 26.5° measured using a powder X-ray diffractometer, such as MiniFlex manufactured by Rigaku Corporation, to be 200 cps or less. The absence of a diffraction peak near 2θ = 26.5° is more preferred, and this indicates that the zirconium oxide particles contain substantially no quartz silica as an impurity. The crystallite size of the zirconium oxide can be measured using a powder X-ray diffractometer. Preferably, the crystallite sizes determined based on the diffraction intensities near 2θ = 28.0° and near 2θ = 31.0° are both 330 Å or greater. This indicates that the zirconium oxide crystal system is a monoclinic system and that the crystallite size is large.

The amount of metallic impurities included in the zirconium oxide particles should be low. Examples of metallic impurities in the zirconium oxide particles include calcium, magnesium, hafnium, yttrium, and silicon, which are mentioned earlier, as well as aluminum, iron, copper, chromium, and titanium. The silicon oxide content in the zirconium oxide particles is preferably 1% by mass or less, more preferably 0.5% by mass or less, and even more preferably 0.2% by mass or less. It is preferable that the contents of aluminum oxide and iron oxide in the zirconium oxide particles each be 0.1% by mass or less. The contents of silicon oxide, aluminum oxide, and iron oxide can be calculated based on measurements with an inductively coupled plasma (ICP) emission spectrophotometer, such as ICPE-9000 manufactured by Shimadzu Corporation.

The zirconium oxide particles have a specific surface area of no less than 1 m²/g, and more preferably no less than 2 m²/g. The specific surface area of the zirconium oxide particles is 9 m²/g or less. When the specific surface area of the zirconium oxide particles is within the range of 1 to 9 m²/g, it is easy to increase the polishing rate of a hard and brittle material substrate with the polishing composition to a level suitable for practical use. The specific surface area of the zirconium oxide particles can be measured with a surface area analyzer that uses the nitrogen absorption method, such as FlowSorb II 2300 manufactured by Shimadzu Corporation.

The zirconium oxide particles have an average primary particle size of 0.3 µm or less, more preferably 0.2 µm or less, and even more preferably 0.15 µm or less. As the average primary particle size decreases, the surface roughness of a hard and brittle material substrate polished with the polishing composition is improved. In this respect, when the average primary particle size of the zirconium oxide particles is 0.3 µm or less, more specifically 0.2 µm or less, and even more specifically 0.15 µm or less, it is easy to improve the surface roughness of a hard and brittle material substrate polished with the polishing composition to a level particularly suitable for practice use. The primary particle size of the zirconium oxide particles can be calculated based on photographs taken with a scanning electron microscope, such as S-4700 manufactured by Hitachi High Technologies. For example, the area of an image of a zirconium oxide particle in an electron micrograph taken at a magnification of from 10.000X to 50.000X is measured, and the primary particle size of the zirconium oxide particle is determined as the diameter of a circle of the same area. The average primary particle size of the zirconium oxide particles is the volume-based cumulative 50% particle size, calculated as the average value for at least 100 randomly selected particles of the primary particle sizes determined in the manner just described. Computation of the primary particle size and the average primary particle size may be carried out using a commercial image analysis system.

The zirconium oxide particles have an average secondary particle size of no less than 0.1 µm, more preferably no less than 0.3 µm, and even more preferably no less than 0.5 µm. As the average secondary particle size increases, the polishing rate of a hard and brittle material substrate with the polishing composition is improved. In this respect, when the average secondary particle size of the zirconium oxide particles is no less than 0.1 µm, more specifically no less than 0.3 µm, and even more specifically no less than 0.5 µm, it is easy to improve the polish rate of a hard and brittle material substrate with the polishing composition to a level particularly suitable for practical use. The average secondary particle size of the zirconium oxide particles is the volume-based cumulative 50% particle size, determined with a laser diffraction/scattering type particle size analyzer, such as LA-950 manufactured by Horiba, Ltd.

The average secondary particle size of the zirconium oxide particles is 5 µm or less, more preferably 3 µm or less, and even more preferably 1.5 µm or less. As the average secondary particle size decreases, the dispersion stability of the polishing composition is improved, in addition to which scratching of a hard and brittle material substrate polished with the polishing composition is suppressed. In this respect, when the average secondary particle size of the zirconium oxide particles is 5 µm or less, more specifically 3 µm or less, and even more specifically 1.5 µm or less, it is easy to improve the dispersion stability of the polishing composition and the surface accuracy of a hard and brittle substrate material substrate polished with the polishing composition to levels particularly suitable for practical use.

Of the zirconium oxide particles, the number of coarse particles having a secondary particle size of no less than 5 µm is preferably 10,000,000 or less, more preferably 5,000,000 or less, and even more preferably 2,000,000 or less, per mL of an aqueous dispersion containing 1% by mass of the zirconium oxide particles. As the number of the coarse particles decreases, scratching of the hard and brittle material substrate polished with the polishing composition is suppressed. In this respect, when the number of the coarse particles is 10,000,000 or less, more specifically 5,000,000 or less, and even more specifically 2,000,000 or less, per mL of an aqueous dispersion containing 1% by mass of the zirconium oxide particles, it is easy to improve the surface accuracy of a hard and brittle substrate material substrate polished with the polishing composition to a level particularly suitable for practical use. The number of zirconium oxide particles having a secondary particle size of no less than 5 µm can be determined with a particle counting-type particle size analyzer, such as AccuSizer 780FX manufactured by Paeticle Sizing Systems, Ltd.

The method of producing the zirconium oxide particles is not particularly limited, and may be either a wet method or a dry method. In wet methods, a zirconium-containing ore, such as zircon and zircon sand, is used as the starting material. The ore is melted, dissolved, and refined to obtain a zirconium compound. The zirconium compound is hydrolyzed to obtain zirconium hydroxide, following which the zirconium hydroxide is subjected to calcination and powdering, thereby obtaining zirconium oxide particles. In dry methods, silicon oxide is removed from zirconium-containing ore, such as zircon and zircon sand, by high-temperature treatment to obtain zirconium oxide particles, or zirconium oxide ore, such as baddeleyite, is subjected to powdering, following which impurities are removed, thereby obtaining zirconium oxide particles. Wet methods are better able than dry methods to obtain high-purity zirconium oxide particles, in addition to which the particle size and specific surface area of the resulting zirconium oxide particles is controlled with relative ease by processes such as calcination, powdering, and classification. Hence, it is desirable for zirconium oxide particles used in the present invention to be produced by a wet process. In order to obtain high-purity zirconium oxide particles by a dry process, it is preferable to include the step of sublimating impurities, such as silicon oxide, by high-temperature treatment. The high-temperature treatment in this case is carried out by using an arc furnace, for example, to heat the starting ore to generally at least 2,000°C, and preferably at least about 2,700°C.

In a method of producing the zirconium oxide particles, a powdering step is required both to reduce the zirconium oxide particles to a uniformly small particle size and also to remove impurities. Through the execution of the powdering, the secondary particles that have formed by aggregation of primary particles are at least partly broken up into at most the primary particles. Examples of techniques for the powdering include those carried out in a ball mill, bead mill, or hammer mill using milling media, and those carried out in a jet mill without the use of milling media. Other approaches are wet methods that use a solvent, and dry methods that do not use a solvent.

When milling media, such as balls or beads, are used in powdering, fragments that arise due to wear or fracture of the media may get mixed in with the zirconium oxide particles. In addition, the shapes of the primary particles sometimes change due to pressure exerted from the media, which may affect the specific surface area and polishing performance of the zirconium oxide particles. Such concerns are absent in the case where the powdering is carried out without the use of milling media.

In the case where the powdering is carried out by a wet method, it is necessary to use a dispersant during the powdering, and the dispersant may affect the stability of the abrasive. In addition, to obtain the zirconium oxide particles in the form of a dry powder, a drying step is required after powdering. In this respect, powdering by a dry method has the advantage that there is no need for a dispersant. Moreover, in powdering by a dry method, the powdering efficiency is relatively high, enabling zirconium oxide particles of the desired particle size to be efficiently obtained.

In light of the above, the zirconium oxide particle powdering step is preferably carried out by a dry method with a jet mill, which does not use a milling medium.

Aside from zirconium oxide particles, the abrasive may include also particles other than zirconium oxide particles. Examples of particles other than zirconium oxide particles include aluminum oxide particles, silicon dioxide particles, cerium oxide particles, titanium oxide particles, and zircon particles. For example, the abrasive according to the present embodiment may contain zirconium oxide and cerium oxide. However, a high proportion of zirconium oxide in the abrasive is preferred. Specifically, the zirconium oxide content in the abrasive is preferably no less than 50% by mass, and more preferably no less than 90% by mass. The silicon dioxide content in the abrasive is preferably less than 10% by mass, and more preferably less than 1% by mass. The cerium oxide content in the abrasive is preferably less than 40% by mass, and more preferably less than 9% by mass.

The abrasive content in the polishing composition is preferably no less than 0.1% by mass, more preferably no less than 1% by mass, and even more preferably no less than 3% by mass. As the abrasive content increases, the polishing rate of a hard and brittle material with the polishing composition is improved. In this respect, when the abrasive content in the polishing composition is no less than 0.1% by mass, more specifically no less than 1% by mass, and even more specifically no less than 3% by mass, it is easy to improve the polishing rate of a hard and brittle material with the polishing composition to a level particularly suitable for practical use.

The pH of the polishing composition is preferably no less than 3 and is preferably 12 or less. When the pH of the polishing composition falls in the above range, it is easy to improve the polishing rate of a hard and brittle material with the polishing composition to a level particularly suitable for practical use.

The pH of the polishing composition may be adjusted using any of various acids, bases, or their salts. For example, preferred use may be made of organic acids, such as carboxylic acids, organic phosphonic acids, and organic sulfonic acids; inorganic acids, such as phosphoric acid, phosphorous acid, sulfuric acid, nitric acid, hydrochloric acid, boric acid, and carbonic acid; organic bases, such as tetramethoxyammonium oxide, trimethanolamine, and monoethanolamine; inorganic bases, such as potassium hydroxide, sodium hydroxide, and ammonia; and salts thereof.

A cerium salt or a zirconium salt may be added to the polishing composition in order to promote polishing. Examples of cerium salts include cerium ammonium nitrate, cerium nitrate, cerium chloride, and cerium sulfate. Examples of zirconium salts include zirconium oxychloride, zirconium carbonate, and zirconium hydroxide.

The cerium salt content in the polishing composition is preferably no less than 2 mM, and more preferably no less than 20 mM. The zirconium salt content in the polishing composition is preferably no less than 1 mM, and more preferably no less than 10 mM. As the cerium salt content or zirconium salt content increases, the polishing rate of a hard and brittle material with the polishing composition is improved.

The cerium salt content in the polishing composition is preferably 360 mM or less. The zirconium salt content in the polishing composition is preferably 180 mM or less. When a cerium salt has been added to the polishing composition, the cerium salt may precipitates, depending on the type of alkali used to adjust the pH. With the cerium salt precipitation, the polishing promoting effect of the cerium salt addition is not fully obtainable.

A dispersant may be added to the polishing composition in order to enhance the dispersion stability. As noted earlier, a dispersant is sometimes used in the powdering or classification step during the zirconium oxide particle production. Examples of dispersants include polyphosphoric acid salts, such as sodium hexametaphosphate and sodium pyrophosphate. Certain types of water-soluble polymers or salts thereof may also be used as dispersants. By adding a dispersant, the dispersion stability of the polishing composition improves, making it possible to stabilize feeding of the polishing composition by rendering the slurry concentration uniform. On the other hand, in the case where a dispersant was added in excess, a hard precipitate is likely to be formed from the settling out of the abrasive in the polishing composition during storage or transport. Such a precipitate is not easy to be dispersed during use of the polishing composition. That is, the redispersibility of the abrasive in the polishing composition may be deteriorated.

Examples of water-soluble polymers used as the dispersant includes polycarboxylic acids, polycarboxylic acid salts, polysulfonic acids, polysulfonic acid salts, polyamines, polyamides, polyols, polysaccharides, and derivatives or copolymers thereof. Specific examples include polystyrene sulfonic acid salts, polyisoprene sulfonic acid salts, polyacrylic acid salts, polymaleic acid, polyitaconic acid, polyvinyl acetate, polyvinyl alcohol, polyglycerol, polyvinylpyrrolidone, copolymers of isoprene sulfonate and acrylic acid, polyvinylpyrrolidone-polyacrylic acid copolymers, polyvinylpyrrolidone-vinyl acetate copolymers, salts of naphthalenesulfonic acid formalin condensates, diallylamine hydrochloride-sulfur dioxide copolymers, carboxymethylcellulose, carboxymethylcellulose salts, hydroxyethyl cellulose, hydroxypropyl cellulose, pullulan, chitosan, and chitosan salts.

The dispersant content in the polishing composition is preferably no less than 0.001% by mass, more preferably no less than 0.005% by mass, and even more preferably no less than 0.02% by mass. When the dispersant content is no less than 0.001% by mass, it is easy to obtain a polishing composition having a good dispersion stability. On the other hand, the dispersant content in the polishing composition is preferably 10% by mass or less, more preferably 1% by mass or less, and even more preferably 0.2% by mass or less. When the dispersant content is 10% by mass or less, the storage stability of the polishing composition is increased without deteriorating the redispersibility of the abrasive in the polishing composition.

In addition, any of various surfactants may be added as a roll-off reducing agent to the polishing composition. A roll-off reducing agent acts to prevent the phenomenon known as "roll-off", which is a worsening in the planarity of the peripheral portion of a hard and brittle material substrate relative to the center portion of the substrate on account of excessive polishing. The reason why adding a roll-off reducing agent suppresses excessive polishing of the peripheral portion of a hard and brittle material substrate is thought to be that friction between the hard and brittle material substrate and the polishing pad is suitably adjusted.

A surfactant used as a roll-off reducing agent may be either an anionic or nonionic surfactant. Preferred examples of nonionic surfactants include polymers having a plurality of the same or different oxyalkylene units, and compounds obtained by bonding an alcohol, a hydrocarbon, or an aromatic ring to such a polymer. Specific examples include polyoxyethylene alkyl ethers, polyoxyethylene polyoxypropylene alkyl ethers, polyoxyethylene polyoxybutylene alkyl ethers, polyoxyethylene polyoxypropylene polyoxybutylene alkyl ethers, polyoxyethylene carboxylic acid esters, polyoxyethylene carboxylic acid diesters, polyoxyethylene polyoxypropylene carboxylic acid esters, polyoxyethylene polyoxybutylene carboxylic acid esters, polyoxyethylene polyoxypropylene polyoxybutylene carboxylic acid esters, polyoxyethylene polyoxypropylene copolymers, polyoxyethylene polyoxybutylene copolymers, polyoxyethylene polyoxypropylene polyoxybutylene copolymers, polyoxyethylene sorbitan fatty acid esters, polyoxyethylene sorbitol fatty acid esters, monolauric acid polyoxyethylene sorbitan, monopalmitic acid polyoxyethylene sorbitan, monostearic acid polyoxyethylene sorbitan, monooleic acid polyoxyethylene sorbitan, trioleic acid polyoxyethylene sorbitan, monocaprylic acid polyoxyethylene sorbitan, tetraoleic acid polyoxyethylene sorbitol, and compounds of General Formula (1) below.

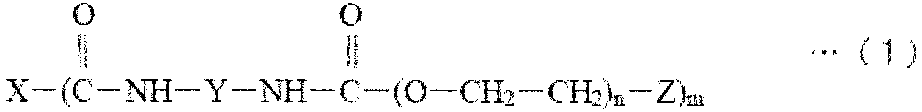

In Formula (1), X is a polyether polyol residue derived from a compound having an active hydrogen atom and an alkylene oxide (the polyether chain of the polyether polyol containing from 20 to 90% by weight of an oxyethylene group); m is an integer from 2 to 8 and is equal to the number of hydroxyl groups on a polyether polyol molecule; Y is a divalent hydrocarbon group; Z is a monovalent compound residue having an active hydrogen atom; and n is an integer of 3 or more.

Example of anionic surfactants include sulfonic acid-based surfactants, and specific examples include alkylsulfonic acids, alkyl ether sulfonic acids, polyoxyethylene alkyl ether sulfonic acids, alkyl aromatic sulfonic acids, alkyl ether aromatic sulfonic acids, and polyoxyethylene alkyl ether aromatic sulfonic acids.

The roll-off reducing agent content in the polishing composition is preferably no less than 0.001% by mass, and more preferably no less than 0.005% by mass. When the roll-off reducing agent content is no less than 0.001% by mass, the amount of roll-off on a hard and brittle material substrate polished with the polishing composition is reduced, making it easy to obtain a hard and brittle material substrate having a good planarity. On the other hand, the roll-off reducing agent content in the polishing composition is preferably 1% by mass or less, and more specifically 0.5% by mass or less. When the roll-off reducing agent content is 1% by mass or less, it is easy to maintain the polishing rate of a hard and brittle material with the polishing composition at a level particularly suitable for practical use.

The above embodiment provides the following advantages.

The zirconium oxide particles included in the polishing composition according to the embodiment have a specific surface area of from 1 to 9 m²/g. Zirconium oxide particles with a specific surface area of from 1 to 9 m²/g have the ability to polish a hard and brittle material substrate at a high rate of removal, and also have the ability to advantageously reduce the surface roughness of the polished hard and brittle material substrate. Accordingly, the polishing composition according to the embodiment is suitably used in polishing a hard and brittle material substrate. As used herein, "a hard and brittle material" refers to a brittle material that has a high hardness, examples of which include glass, ceramic, stone, and semiconductor materials.

The polishing composition according to the embodiment is particularly suitably used in polishing any of the following hard and brittle materials: sapphire, silicon nitride, silicon carbide, silicon oxide, glass, gallium nitride, gallium arsenide, indium arsenide, and indium phosphide. Abrasives composed chiefly of cerium oxide are currently primarily used in applications that involve polishing glass or oxide substrates, such as quartz glass, soda-lime glass, aluminosilicate glass, borosilicate glass, aluminoborosilicate glass, alkali-free glass, crystallized glass, soda aluminosilicate glass, and silicon oxide films. The zirconium oxide particles according to the embodiment are expected to be used as an alternative material in place of the conventional cerium oxide abrasives.

The polishing composition according to the embodiment is prepared by dispersing zirconium oxide in water and optionally adding known additives. The various ingredients may be mixed in any order during preparation of the polishing composition. The polishing composition may be prepared by first producing a concentrated composition containing zirconium oxide, water, and additives, then diluting the concentrated composition with water. Alternatively, the polishing composition may be prepared by dispersing zirconium oxide in an aqueous solution in which additives have been dissolved. Alternatively, the polishing composition may be prepared by mixing additives in powder form into zirconium oxide in powder form, then adding water to the resulting mixture.

The polishing composition according to the embodiment can be used in the same polishing systems and under the same conditions as are typically used when polishing a hard and brittle material substrate. In the case where a single-side polisher is used, the substrate is held by a holder that is referred to as a "carrier," and a platen having a polishing pad attached thereto is pressed against one side of the substrate. In this state, one side of the substrate is polished by turning the platen while feeding the polishing composition to the substrate. In the case where a double-side polisher is used, the substrate is held by a holder that is referred to as a "carrier," and top and bottom platens each having a polishing pad attached thereto are pressed against both sides of the substrate. In this state, both sides of the substrate are polished by turning the two platens in mutually opposing directions while feeding the polishing composition to the substrate from above. The surface of the substrate is subjected to polishing by the physical effects due to the friction of the polishing pad and of the abrasive in the polishing composition against the surface of the substrate, and by the chemical effects imparted to the substrate surface by ingredients other than the abrasive in the polishing composition.

The higher the load during polishing (or in other words, polishing load), the greater the rise in the polishing rate. The polishing load when polishing a hard and brittle material substrate with the polishing composition according to the embodiment, although not particularly limited, is preferably from 50 to 1,000 g, and more preferably from 70 to 800 g, per cm² of area of the substrate surface. When the polishing load is within any of the above ranges, a polishing rate sufficient for practical use is achieved, in addition to which a polished substrate having few surface defects is obtained.

The linear speed during polishing (or in other words, polishing linear speed) is generally influenced by such parameters as the rotational speed of the polishing pad, the rotational speed of the carrier, the size of the substrate, and the number of substrates. Because a higher linear speed results in the application of larger frictional forces to the substrate, the substrate is subjected to a stronger mechanical polishing effect. In addition, the heat of friction increases, as a result of which chemical polishing effects due to the polishing composition may be strengthened. However, if the linear speed is too high, the polishing pad fails to provide sufficient friction against the substrate, which may lead to a decrease in the polishing rate. The linear speed when polishing a hard and brittle material substrate with the polishing composition according to the embodiment, although not particularly limited, is preferably from 10 to 150 m/min, and more preferably from 30 to 100 m/min. When the linear speed is within any of the above ranges, a polishing rate sufficient for practical use is easily obtained.

The polishing pad employed when polishing a hard and brittle material substrate with the polishing composition according to the embodiment may be, for example, of any of the following types: polyurethane pads, nonwoven fabric pads, and suede pads. The polishing pad may be one which contains abrasive grains or may be one which does not contain abrasive grains. No particular limitation is imposed on the hardness and thickness of the polishing pad.

The polishing composition that has been used to polish a hard and brittle material substrate may be collected and reused (recycled). Specifically, spent polishing composition that has been discharged from the polisher may be collected in a tank, then again supplied to the polisher from the tank. In this case, the need to treat spent polishing composition as a waste diminishes, making it possible to reduce the impact on the environment and to reduce costs.

When the polishing composition is cyclically used, at least any of the ingredients (e.g., abrasive) in the polishing composition that are consumed or depleted by use in substrate polishing may be replenished. The ingredients being replenished may be added separately to the spent polishing composition, or two or more ingredients may be added to the spent polishing composition in the form of a mixture containing the ingredients in any concentration.

The feed rate of the polishing composition to the polisher is suitably set according to the type of substrate to be polished, the type of polisher, and the polishing conditions. However, a rate sufficient for the polishing composition to be supplied uniformly to the entire substrate and polishing pad is preferred.

In the case of substrates for which an especially high surface accuracy is required, such as semiconductor substrates, substrates for hard disks, liquid-crystal display panels, and synthetic quartz substrates for photomasks, after the substrate has been polished with the polishing composition according to the embodiment, it is preferable to carry out fine polishing. An abrasive-containing fine polishing composition is used in fine polishing. To reduce undulations, roughness, and defects in the substrate surface, the abrasive in the fine polishing composition has an average particle size of preferably 0.15 µm or less, more preferably 0.10 µm or less, and even more preferably 0.07 µm or less. At the same time, to improve the polishing rate, the average particle size of the abrasive in the fine polishing composition is preferably no less than 0.01 µm, and more preferably no less than 0.02 µm. The average particle size of the abrasive in the fine polishing composition can be measured by dynamic light scattering using, for example, Nanotrac UPA-UT151 manufactured by Nikkiso Co., Ltd.

The pH of the fine polishing composition is preferably from 1 to 4 or from 9 to 11. As in the case of the polishing composition according to the embodiment, pH adjustment of the fine polishing composition can be carried out using any of various acids, bases, and salts thereof.

Where necessary, an additive such as a chelating agent, a surfactant, a preservative, a mildew-proofing agent, and a rust inhibitor may be added to the polishing composition according to the embodiment.

Where necessary, an additive such as a chelating agent, a water-soluble polymer, a surfactant, a preservative, a mildew-proofing agent, and a rust inhibitors may be added to the fine polishing composition.

The polishing composition according to the embodiment and the fine polishing composition may be prepared by diluting undiluted solutions of the respective compositions with water.

The polishing composition according to the embodiment and the fine polishing composition may be prepared by dissolving or dispersing the respective compositions in powder form within water.

Next, the present invention is illustrated more in detail by way of working examples and comparative examples. Examples 9 and 21 are reference examples.

Polishing compositions in Examples 1 to 24 and Comparative Examples 1 to 3 were prepared by mixing monoclinic zirconium oxide particles into water, then adjusting the pH using phosphorous acid or potassium hydroxide. A polishing composition in Reference Example 1 was prepared by mixing CEPOL-132 (from Fujimi Incorporated), which is a commercially available cerium oxide abrasive, into water, and adjusting the pH with potassium hydroxide. Details on each of the polishing compositions are shown in Table 1.

The column entitled "Production Method" in Table 1 shows the method of producing the zirconium oxide particles used in the respective polishing compositions of Examples 1 to 24 and Comparative Examples 1 to 3. "W" indicates that zirconium oxide particles produced by a wet method were used, and "D" indicates that zirconium oxide particles produced by a dry method were used.

The column entitled "SA" in Table 1 shows the results obtained from measurements of the specific surface area of the zirconium oxide particles or cerium oxide particles used in the respective polishing compositions. Measurement of the specific surface area was carried out by nitrogen adsorption using FlowSorb II 2300 manufactured by Shimadzu Corporation.

The column entitled "Purity" in Table 1 shows the results obtained from measurements of the purity of zirconium oxide particles used in the respective polishing compositions of Examples 1 to 24 and Comparative Examples 1 to 3. The purity was measured using XRF-1800 manufactured by Shimadzu Corporation.

The columns entitled "SiO₂" and "TiO₂" in Table 1 respectively show the amounts of silicon dioxide and titanium dioxide included in the zirconium oxide particles used in the polishing compositions of Examples 1 to 24 and Comparative Examples 1 to 3. The silicon dioxide and titanium dioxide contents were measured using ICPE-9000 manufactured by Shimadzu Corporation.

The column entitled "Primary particle size" in Table 1 shows the results obtained from measurements of the average primary particle sizes of the zirconium oxide particles or cerium oxide particles used in the respective polishing compositions. The measured values of the average primary particle sizes in this column are the volume-based cumulative 50% particle sizes, determined using Mac-View, which is an image analysis system manufactured by Mountech Co., Ltd, based on photographs taken with a scanning electron microscope S-4700 manufactured by Hitachi High Technologies.

The column entitled "Secondary particle size" in Table 1 shows the results obtained from measurements of the average secondary particle sizes of the zirconium oxide particles or cerium oxide particles used in the respective polishing compositions. The measured values of the average secondary particle sizes in this column are the volume-based cumulative 50% particle sizes, determined using LA-950 manufactured by Horiba, Ltd.

The column entitled "Number of coarse particles" in Table 1 shows the results obtained by measuring the number of coarse particles having a secondary particle size of no less than 5 µm from among the zirconium oxide particles or cerium oxide particles used in the respective polishing compositions. The measured values of the number of coarse particles in this column indicate the number of coarse particles per mL of a 1% by mass aqueous dispersion containing the zirconium oxide particles or cerium oxide particles, as determined using AccuSizer 780 FX manufactured by Paeticle Sizing Systems.

The column entitled "XRD 26.5°"in Table 1 indicates the intensity of the diffraction peak near 2θ = 26.5° measured using MiniFlex manufactured by Rigaku Corporation for the zirconium oxide particles used in the respective polishing compositions in Examples 2 to 6, 10 to 18, and 20 to 22 and in Comparative Example 2.

The columns entitled "Crystallite size 28.0°" and "Crystallite size 31.0°"in Table 1 respectively indicate the crystallite sizes calculated based on the diffraction intensity near 2θ = 28.0° and the diffraction intensity near 2θ = 31.0° using MiniFlex manufactured by Rigaku Corporation for the zirconium oxide particles used in the respective polishing compositions in Examples 2 to 6, 10 to 18, and 20 to 22 and in Comparative Example 2.

The columns entitled "Particle concentration" and "pH" in Table 1 respectively show the amount of zirconium oxide particles or cerium oxide particles included in the respective polishing compositions and the pH values of the respective polishing compositions.

The surfaces of aluminosilicate glass substrates for magnetic disks, each having a diameter of 65 mm (about 2.5 inches), were polished under the conditions shown in Table 2 with the respective polishing compositions, and the polishing rate was determined based on the difference in the weights of the substrate before and after polishing. The column entitled "Polishing rate" in Table 3 shows the evaluation results obtained by assigning a rating of "6" for a polishing rate of no less than 0.6 µm/min, "5" for a polishing rate of no less than 0.5 µm/min but less than 0.6 µm/min, "4" for a polishing rate of no less than 0.4 µm/min but less than 0.5 µm/min, "3" for a polishing rate of no less than 0.3 µm/min but less than 0.4 µm/min, "2" for a polishing rate of no less than 0.2 µm/min but less than 0.3 µm/min, and "1" for a polishing rate of less than 0.2 µm/min.

The number of scratches on the surfaces of aluminosilicate glass substrates polished with the respective polishing compositions was measured using Micro Max VMX-2100 manufactured by VISION PSYTEC. The column entitled "Scratches" in Table 3 shows the results obtained by assigning a rating of "5" when the number of scratches counted per side was less than 20, "4" when the number of scratches was no less than 20 but less than 100, "3" when the number of scratches was no less than 100 but less than 300, "2" when the number of scratches was no less than 300 but less than 500, and "1" when the number of scratches was 500 or more.

The surfaces of alkali-free glass substrates for liquid-crystal display glass, each having a diameter of 50 mm (about 2 inches), were polished under the conditions shown in Table 4 with the respective polishing compositions, and the polishing rate was determined based on the difference in the weights of the substrate before and after polishing. The column entitled "Polishing rate" in Table 5 shows the evaluation results obtained by assigning a rating of "6" for a polishing rate of no less than 0.6 µm/min, "5" for a polishing rate of no less than 0.5 µm/min but less than 0.6 µm/min, "4" for a polishing rate of no less than 0.4 µm/min but less than 0.5 µm/min, "3" for a polishing rate of no less than 0.3 µm/min but less than 0.4 µm/min, "2" for a polishing rate of no less than 0.2 µm/min but less than 0.3 µm/min, and "1" for a polishing rate of less than 0.2 µm/min.

The number of scratches on the surfaces of alkali-free glass substrates polished with the respective polishing compositions was measured using Micro Max VMX-2100 manufactured by VISION PSYTEC. The column entitled "Scratches" in Table 5 shows the results obtained by assigning a rating of "5" when the number of scratches counted per side was less than 10, "4" when the number of scratches was no less than 10 but less than 100, "3" when the number of scratches was no less than 100 but less than 200, "2" when the number of scratches was no less than 200 but less than 400, and "1" when the number of scratches was 400 or more.

With regard to the slurry stabilities of the respective polishing compositions, the column entitled "Slurry stability" in Tables 3 and 5 show the results obtained by assigning a rating of "5" when the abrasive grain aggregation and the formation of precipitate were not observed even after 10 minutes had elapsed following the start of standing at a normal temperature, "4" when either was observed during the elapsed time being no less than5 minutes and less than 10 minutes, "3" when either was observed during the elapsed time being no less than 1 minute and less than 5 minutes, "2" when either was observed during the elapsed time being no less than 30 seconds and less than 1 minutes, and "1" when either was observed during the elapsed time being less than 30 seconds.

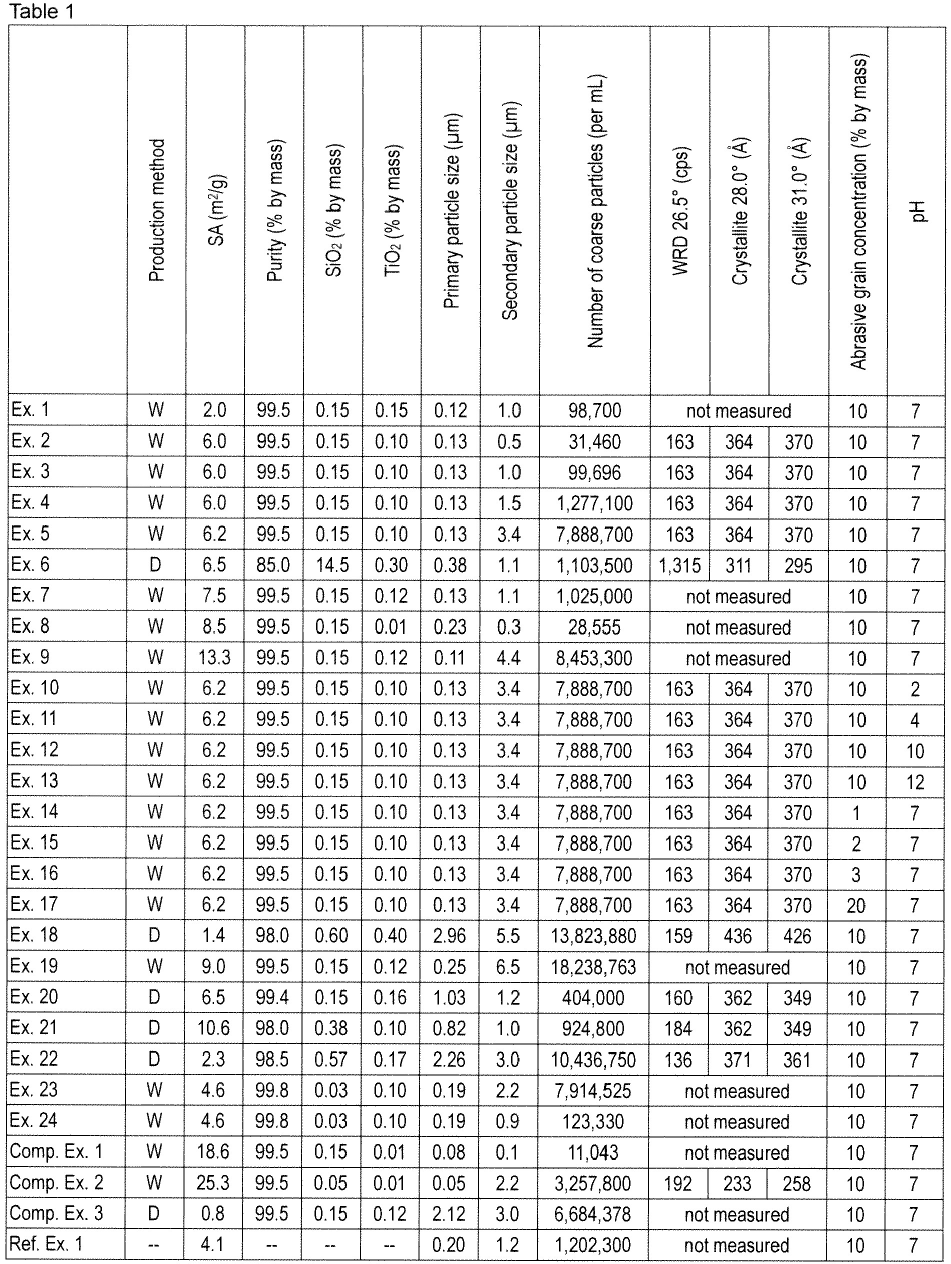

**Table 2**

| |
|---|
| Polishing substrate: Aluminosilicate glass substrate for magnetic disks; diameter, 65 mm (about 2.5 inches) |
| Polisher: "9B-5P" a double-side polisher manufactured by Speedfam Co., Ltd. |
| Polishing pad: "MH-S15A" polyurethane pads manufactured by Nitta Haas Incorporated |
| Polishing pressure: 130 g/cm² |
| Top platen rotational speed: 13 rpm |
| Bottom platen rotational speed: 40 rpm |
| Feed rate of polishing composition: 360 mL/min |

**Table 3**

| | Polishing rate | Scratches | Slurry stability |
|---|---|---|---|
| Ex. 1 | 5 | 5 | 5 |
| Ex. 2 | 5 | 5 | 5 |
| Ex. 3 | 5 | 5 | 5 |
| Ex. 4 | 5 | 4 | 4 |
| Ex. 5 | 5 | 3 | 4 |
| Ex. 6 | 3 | 4 | 4 |
| Ex. 7 | 5 | 5 | 5 |
| Ex. 8 | 4 | 5 | 5 |
| Ex. 9 | 4 | 3 | 3 |
| Ex. 10 | 4 | 3 | 4 |
| Ex. 11 | 5 | 3 | 4 |
| Ex. 12 | 4 | 3 | 5 |
| Ex. 13 | 4 | 3 | 5 |
| Ex. 14 | 3 | 4 | 4 |
| Ex. 15 | 4 | 4 | 4 |
| Ex. 16 | 4 | 5 | 4 |
| Ex. 17 | 5 | 3 | 4 |
| Ex. 18 | 3 | 1 | 1 |
| Ex. 19 | 4 | 1 | 1 |
| Ex. 20 | 5 | 1 | 5 |
| Ex. 21 | 4 | 3 | 5 |
| Ex. 22 | 3 | 1 | 4 |
| Ex. 23 | 5 | 3 | 4 |
| Ex. 24 | 5 | 5 | 5 |
| Comp. Ex. 1 | 2 | 5 | 5 |
| Comp. Ex. 2 | 1 | 4 | 4 |
| Comp. Ex. 3 | 2 | 3 | 4 |
| Ref. Ex. 1 | 5 | 5 | 3 |

**Table 4**

| |
|---|
| Polishing substrate: Alkali-free glass substrate for liquid-crystal display glass; diameter, 50 mm (about 2 inches) |
| Polisher: "EJ-380IN" a single-side polisher manufactured by Engis Japan Corporation |
| Polishing pad: "MH-S15A" polyurethane pads manufactured by Nitta Haas Incorporated |
| Polishing pressure: 130 g/cm² |
| Platen rotational speed: 70 rpm |
| Feed rate of polishing composition: 10 mL/min |

**Table 5**

| | Polishing rate | Scratches | Slurry stability |
|---|---|---|---|
| Ex. 1 | 5 | 5 | 5 |
| Ex. 2 | 4 | 5 | 5 |
| Ex. 3 | 5 | 5 | 5 |
| Ex. 4 | 5 | 4 | 4 |
| Ex. 5 | 5 | 3 | 4 |
| Ex. 6 | 3 | 4 | 4 |
| Ex. 7 | 5 | 5 | 5 |
| Ex. 8 | 3 | 5 | 5 |
| Ex. 9 | 4 | 3 | 3 |
| Ex. 10 | 4 | 3 | 4 |
| Ex. 11 | 5 | 3 | 4 |
| Ex. 12 | 4 | 3 | 5 |
| Ex. 13 | 4 | 3 | 5 |
| Ex. 14 | 4 | 3 | 4 |
| Ex. 15 | 4 | 3 | 4 |
| Ex. 16 | 5 | 3 | 4 |
| Ex. 17 | 5 | 3 | 4 |
| Ex. 18 | 3 | 1 | 1 |
| Ex. 19 | 4 | 1 | 1 |
| Ex. 20 | 4 | 1 | 5 |
| Ex. 21 | 4 | 3 | 5 |
| Ex. 22 | 3 | 1 | 4 |
| Ex. 23 | 5 | 3 | 4 |
| Ex. 24 | 5 | 5 | 5 |
| Comp. Ex. 1 | 2 | 5 | 5 |
| Comp. Ex. 2 | 1 | 4 | 4 |
| Comp. Ex. 3 | 2 | 3 | 4 |
| Ref. Ex. 1 | 5 | 5 | 3 |

As shown in Tables 3 and 5, the polishing compositions in Examples 1 to 24 all had ratings of polishing rate at acceptable levels of 3 or more. In contrast, all of the polishing compositions in Comparative Examples 1 to 3 had rating of polishing rate at unacceptable levels of 2 or less.

In Examples 25 to 33, the same monoclinic zirconium oxide particles as those used in Example 3 were mixed with water, cerium(IV) ammonium nitrate as cerium ions and zirconium(IV) dinitrate oxide hydrate as zirconium ions were added in respective given amounts, and the pH was subsequently adjusted with potassium hydroxide, thereby preparing polishing compositions having zirconium oxide particle contents of 10% by mass. The amounts of cerium ions and zirconium ions added to the respective polishing compositions and the pH values of the respective polishing compositions are shown in Table 6.

**Table 6**

| | Cerium(IV) ammonium nitrate (mM) | Zirconium(IV) dinitrate oxide hydrate (mM) | pH |
|---|---|---|---|
| Ex. 25 | 55 | 0 | 3 |
| Ex. 26 | 220 | 0 | 3 |
| Ex. 27 | 360 | 0 | 3 |
| Ex. 28 | 220 | 0 | 7 |
| Ex. 29 | 220 | 0 | 10 |
| Ex. 30 | 0 | 35 | 3 |
| Ex. 31 | 0 | 120 | 3 |
| Ex. 32 | 0 | 35 | 7 |
| Ex. 33 | 0 | 35 | 10 |

The polishing compositions in Example 25 to 33 were evaluated for polishing rate, scratches, and slurry stability in the same way as the polishing compositions of Example 1 to 24. Evaluation results obtained when the surfaces of the aluminosilicate glass substrates for magnetic disks, each having a diameter of 65 mm (about 2.5 inches), were polished under the conditions shown in Table 2 are shown in Table 7, and evaluation results obtained when the surfaces of alkali-free glass substrates for liquid-crystal display glass, each having a diameter of 50 mm (about 2 inches) were polished under the conditions shown in Table 4 are shown in Table 8.

**Table 7**

| | Polishing rate | Scratches | Slurry stability |
|---|---|---|---|
| Ex. 25 | 5 | 5 | 5 |
| Ex. 26 | 6 | 5 | 5 |
| Ex. 27 | 5 | 5 | 5 |
| Ex. 28 | 4 | 5 | 5 |
| Ex. 29 | 3 | 5 | 5 |
| Ex. 30 | 6 | 5 | 5 |
| Ex. 31 | 5 | 5 | 5 |
| Ex. 32 | 5 | 5 | 5 |
| Ex. 33 | 5 | 5 | 5 |

**Table 8**

| | Polishing rate | Scratches | Slurry stability |
|---|---|---|---|
| Ex. 25 | 5 | 5 | 5 |
| Ex. 26 | 6 | 5 | 5 |
| Ex. 27 | 5 | 5 | 5 |
| Ex. 28 | 4 | 5 | 5 |
| Ex. 29 | 3 | 5 | 5 |
| Ex. 30 | 6 | 5 | 5 |
| Ex. 31 | 5 | 5 | 5 |
| Ex. 32 | 5 | 5 | 5 |
| Ex. 33 | 5 | 5 | 5 |

As shown in Tables 7 and 8, each of the polishing compositions in Examples 25 to 27 and 30 to 33 achieved a polishing rate at a level similar to the polishing composition in Example 3. By contrast, the polishing compositions in Examples 28 and 29 were found to have decreased polishing rates compared with the polishing composition in Example 3. In these latter cases, it is thought that the decrease in polishing rate was caused by the pH value of the polishing composition, leading to precipitation of the cerium ions that were added.

### INDUSTRIAL APPLICABILITY

The present invention, when used to polish a hard and brittle material, such as sapphire, silicon nitride, silicon carbide, silicon oxide, glass, gallium nitride, gallium arsenide, indium arsenide, and indium phosphide, enables a substrate having few surface defects and an excellent surface accuracy to be obtained at a high efficiency. Moreover, the use of zirconium oxide particles enables the amount of cerium oxide particles employed as an abrasive to be reduced.

## Claims

1. An abrasive comprising zirconium oxide particles, wherein the zirconium oxide particles have a specific surface area of from 1 to 9 m²/g, wherein the zirconium oxide particles have an average primary particle size of 0.3 µm or less and an average secondary particle size of from 0.1 to 5 µm, and wherein the zirconium oxide particles are composed of crystalline zirconia that is cubic or monoclinic, or composed of amorphous zirconia.

2. The abrasive according to claim 1, wherein the zirconium oxide particles have a purity of no less than 99% by mass.

3. The abrasive according to claim 1 or 2, wherein, of the zirconium oxide particles, the number of particles having a secondary particle size of no less than 5 µm is 10,000,000 or less per mL of an aqueous dispersion containing 1% by mass of the zirconium oxide particles.

4. A method of producing the abrasive according to any one of claims 1 to 3, the method comprising dry powdering zirconium oxide particles.

5. A polishing composition comprising the abrasive according to any one of claims 1 to 3 and water, wherein the content of the abrasive in the polishing composition is no less than 0.1% by mass.

6. The polishing composition according to claim 5, further comprising a cerium salt and/or a zirconium salt.

7. A method of polishing a hard and brittle material with the polishing composition according to claim 5 or 6.

8. A method of manufacturing a hard and brittle material substrate, the method comprising polishing a substrate using the method according to claim 7.

## Patentansprüche

1. Schleifmittel, umfassend Zirkoniumoxidteilchen, wobei die Zirkoniumoxidteilchen eine spezifische Oberfläche von 1 bis 9 m²/g aufweisen, wobei die Zirkoniumoxidteilchen eine durchschnittliche Primärteilchengröße von 0,3 µm oder weniger und eine durchschnittliche Sekundärteilchengröße von 0,1 bis 5 µm aufweisen, und wobei die Zirkoniumoxidteilchen aus kristallinem Zirkoniumdioxid, das kubisch oder monoklin ist, oder aus amorphem Zirkoniumdioxid zusammengesetzt sind.

2. Das Schleifmittel nach Anspruch 1, wobei die Zirkoniumoxidteilchen eine Reinheit von nicht weniger als 99 Masse-% aufweisen.

3. Das Schleifmittel nach Anspruch 1 oder 2, wobei von den Zirkoniumoxidteilchen die Anzahl der Teilchen mit einer Sekundärteilchengröße von nicht weniger als 5 µm 10.000.000 oder weniger pro ml einer wässrigen Dispersion, die 1 Masse-% der Zirkoniumoxidteilchen enthält, beträgt.

4. Verfahren zur Herstellung des Schleifmittels nach einem der Ansprüche 1 bis 3, wobei das Verfahren das Trockenpulverisieren von Zirkoniumoxidteilchen umfasst.

5. Polierzusammensetzung, umfassend das Schleifmittel nach einem der Ansprüche 1 bis 3 und Wasser, wobei der Gehalt des Schleifmittels in der Polierzusammensetzung nicht weniger als 0,1 Masse-% beträgt.

6. Die Polierzusammensetzung nach Anspruch 5, die ferner ein Cer-Salz und/oder ein Zirkonium-Salz umfasst.

7. Verfahren zum Polieren eines harten und spröden Materials mit der Polierzusammensetzung nach Anspruch 5 oder 6.

8. Verfahren zur Herstellung eines Substrats aus hartem und sprödem Material, wobei das Verfahren das Polieren eines Substrats unter Verwendung des Verfahrens nach Anspruch 7 umfasst.

## Revendications

1. Abrasif comprenant des particules d'oxyde de zirconium, les particules d'oxyde de zirconium ayant une surface spécifique de 1 à 9 m²/g, dans lequel les particules d'oxyde de zirconium ont une taille moyenne de particules primaires de 0,3 µm ou moins et une taille moyenne de particules secondaires de 0,1 à 5 µm, et dans lequel les particules d'oxyde de zirconium sont composées de zircone cristalline qui est cubique ou monoclinique, ou composées de zircone amorphe.

2. Abrasif selon la revendication 1, dans lequel les particules d'oxyde de zirconium ont une pureté de pas moins de 99 % en masse.

3. Abrasif selon la revendication 1 ou 2, dans lequel, parmi les particules d'oxyde de zirconium, le nombre de particules ayant une taille de particules secondaires non inférieure à 5 µm est de 10 000 000 ou moins par mL d'une dispersion aqueuse contenant 1 % en masse des particules d'oxyde de zirconium.

4. Procédé de production de l'abrasif selon l'une quelconque des revendications 1 à 3, le procédé comprenant la réduction en poudre sèche de particules d'oxyde de zirconium.

5. Composition de polissage comprenant l'abrasif selon l'une quelconque des revendications 1 à 3 et de l'eau, dans laquelle la teneur en abrasif dans la composition de polissage n'est pas inférieure à 0,1 % en masse.

6. Composition de polissage selon la revendication 5, comprenant en outre un sel de cérium et/ou un sel de zirconium.

7. Procédé de polissage d'un matériau dur et cassant à l'aide de la composition de polissage selon la revendication 5 ou 6.

8. Procédé de fabrication d'un substrat en matériau dur et cassant, le procédé comprenant le polissage d'un substrat en utilisant le procédé selon la revendication 7.
